# FASCICULE DE BREVET EUROPEEN

(11) **EP 3 479 300 B1**
(45) Date de publication et mention de la délivrance du brevet: **14.10.2020**
(21) Numéro de dépôt: 17742494.2
(22) Date de dépôt: 28.06.2017
(51) Int. Cl.: G06K 19/07

(54) **ENTITÉ ÉLECTRONIQUE À COMPOSANT ALIMENTÉ PAR COUPLAGE ÉLECTROMAGNÉTIQUE INTERNE**
ELEKTRONISCHE VORRICHTUNG MIT EINER DURCH INTERNE ELEKTROMAGNETISCHE KOPPLUNG ANGETRIEBENEN KOMPONENTE
ELECTRONIC DEVICE INCLUDING A COMPONENT POWERED BY INTERNAL ELECTROMAGNETIC COUPLING

(30) Priorité: 29.06.2016 FR 1656132
(43) Date de publication de la demande: 08.05.2019
(73) Titulaire: IDEMIA France, 92400 Courbevoie (FR)
(72) Inventeur: GAC, Philippe, 92700 Colombes (FR); GUERARD, Denis, 92700 Colombes (FR); ALI, Ahmed, 92700 Colombes (FR)
(74) Mandataire: Santarelli
(86) Numéro de dépôt international: PCT/FR2017/051734
(87) Numéro de publication internationale: WO 2018/002526

(56) Documents cités:
- EP-A1- 1 895 448
- WO-A1-02/01496
- WO-A1-02/01497
- US-A1- 2014 052 630

## Description

La présente invention concerne une entité électronique, du type comportant un microcircuit et au moins un composant électronique alimenté en courant continu.

Il existe un type d'entité électronique qui comporte principalement un corps et un module encarté dans ce corps en occupant une cavité formée dans le corps.

On connait en particulier un tel type d'entité électronique dans laquelle le composant électronique fait partie du module.

Or, lorsque le composant électronique comporte de nombreuses connections (typiquement entre 10 et 20 bornes), il est alors difficile de le connecter au microcircuit positionné dans le corps, notamment parce qu'une planéité des connexions est difficile à assurer lors de l'encartage du module dans le corps.

Pour certains types d'entités électroniques, il est nécessaire que le composant électronique se trouve en surface de l'entité électronique, c'est-à-dire qu'il affleure une face, aussi dite face supérieure, du corps.

Une telle entité électronique est par exemple une carte dite "biométrique", avec un capteur d'empreinte digitale. Un microcircuit qui recueille les données et qui les traite se trouve alors à l'intérieur du corps de la carte.

Pour obtenir une telle carte, le capteur est possiblement rapporté en toute fin de fabrication au corps de la carte par encartage, par exemple par simple collage via un adhésif anisotrope.

Cependant, la connexion via un adhésif anisotrope nécessite habituellement des objets épais, ce qui n'est pas le cas des composants et des circuits imprimés dans un tel cas.

L'assemblage n'est donc généralement pas satisfaisant.

Par exemple, les documents US 2014/052630 et WO 02/01496 décrivent une carte comportant un écran.

Au moins un des objectifs de la présente demande est ainsi de résoudre, au moins en partie, les inconvénients précités, en menant en outre à d'autres avantages.

Elle vise en particulier à proposer une entité électronique dans laquelle un composant électronique à courant continu est facilement intégré, notamment en vue d'être connecté à une source de courant continu située dans le corps.

A cet effet, est proposée, selon un premier aspect, une entité électronique comportant :
- un corps dans lequel est ménagée une cavité débouchant à une face de ce corps, ladite face du corps formant une face de l'entité,
- un module encarté dans ce corps en occupant ladite cavité,
- un microcircuit faisant partie de ce corps,
- une source de courant continu faisant partie de ce corps, et
- un composant électronique faisant partie du module et accessible depuis l'extérieur au travers de ladite face de l'entité, ce composant électronique étant connecté électriquement au microcircuit et devant être alimenté en courant continu par la source de courant continu,
caractérisée en ce que le corps comporte une première antenne connectée à la source de courant continu au travers d'un oscillateur et en ce que le module comporte en outre une seconde antenne connectée à ce composant électronique au travers d'un circuit redresseur, ces première antenne et seconde antenne étant électro-magnétiquement couplées, assurant une alimentation radiofréquence sans fil du composant électronique du module par la source de courant continu du corps et connectant électriquement le composant électronique au microcircuit.

Ainsi, des moyens de connexion physiques du composant électronique, qui connectent le composant électronique au microcircuit, sont déportés dans le module au lieu d'être en interface entre le module et le corps.

Un oscillateur désigne ici un élément électronique, ou un ensemble d'éléments électroniques, configuré pour transformer un signal continu en un signal alternatif à une fréquence donnée.

Un circuit redresseur désigne ici élément électronique, ou un ensemble d'éléments électroniques, configuré pour redresser un signal alternatif en un signal continu et, optionnellement, le maintenir à un certain niveau, c'est-à-dire à un niveau prédéterminé. A cet effet, le circuit redresseur comporte par exemple possiblement un régulateur.

On connaissait le document WO 2015/015121. Cependant, ce document se limite au cas d'un couplage entre un microcircuit porté par un module et une antenne formée dans le corps dans lequel ce module est encarté, ce qui correspond à un circuit particulièrement simple n'impliquant que des courants alternatifs.

Un tel couplage paraissait impossible à transposer et en tout cas incompatible avec un composant électronique nécessitant une alimentation en courant continu.

Cependant, contrairement aux préjugés, il s'est avéré en réalité qu'il était possible intégrer un composant en courant continu dans un module car il est en fait tout à fait faisable et facile d'ajouter un oscillateur entre la première antenne et la source de courant continu dans le corps et d'ajouter un circuit redresseur entre la seconde antenne et le composant électronique dans le module grâce aux possibilité actuelles de miniaturisation.

Dans une entité électronique selon l'invention, il est alors possible de faire facilement communiquer un composant électronique positionné dans un module, nécessitant une alimentation en courant continu, avec une source de courant continu et un microcircuit compris dans le corps de l'entité électronique, sans contact physique entre le module et le corps, grâce à un système de double antenne.

Les contacts mécaniques entre le composant électronique et un circuit imprimé étant alors déportés dans le module qui est ensuite encarté, le problème de connexion est alors géré séparément de l'encartage, ce qui rend ensuite l'encartage facile à réaliser.

Le module comporte par exemple un support intermédiaire qui comporte la seconde antenne et le circuit redresseur et auquel est connecté le composant électronique.

Par exemple, le couplage entre la première antenne et la seconde antenne est configuré pour transmettre au moins 90% de la puissance émise par la source de courant continu.

Selon un exemple de réalisation, le module comporte un circuit imprimé connecté d'une part à la seconde antenne et d'autre part au composant électronique par une pluralité de bornes dont le nombre est égal ou supérieur à 4.

En effet, il est nécessaire d'avoir un nombre minimum de bornes de connexion correspondant au nombre de signaux à transmettre. Par exemple, il peut s'agir d'un signal dit « d'input » (d'entrée) et/ou d'un signal dit « d'output » (de sortie) et/ou d'un signal « Chip select » pour activer une puce et/ou d'un signal d'horloge et/ou d'une masse et/ou d'au moins un signal d'alimentation.

Dans un exemple de réalisation, l'entité électronique comporte en outre un modulateur connecté à l'une de la première antenne ou de la seconde antenne et un démodulateur connecté à l'autre de la première antenne ou de la seconde antenne, les première antenne et seconde antenne étant ainsi configurées pour assurer en outre une transmission de signaux entre le composant électronique et le microcircuit.

Les première et seconde antennes sont ainsi configurées pour adapter le composant électronique et le microcircuit à une transmission de signaux par couplage électromagnétique, optimisant ainsi un tel agencement de l'entité électronique.

Le composant électronique est par exemple un afficheur ou un capteur. Ainsi, outre l'énergie reçue dans un sens, le composant électronique peut émettre ou recevoir des signaux.

Dans un exemple de réalisation intéressant, le composant électronique est un capteur générant des signaux destinés au microcircuit, le modulateur étant connecté entre le composant électronique et la seconde antenne au sein du module et le démodulateur est connecté entre la première antenne et le microcircuit au sein du corps de sorte que les première et seconde antennes assurent une transmission desdits signaux depuis le composant électronique vers le microcircuit.

Par exemple, le composant électronique est un capteur d'empreinte digitale.

Un tel capteur d'empreinte digitale est aussi possiblement dénommé capteur biométrique.

Dans un exemple de réalisation intéressant, le module comporte un convertisseur parallèle-série entre le composant électronique et la seconde antenne configuré pour au moins transmettre des signaux en série.

En effet, en sortie du composant électronique, les informations peuvent être envoyées en parallèle ou en série. Or une antenne ne peut transmettre des informations qu'en série. Si le composant électronique est optimisé pour envoyer des signaux en parallèle, par exemple des signaux à destination d'un composant dans le corps de l'entité électronique, il est alors nécessaire de disposer un tel convertisseur parallèle-série, en particulier dans le module.

Selon un exemple de réalisation particulièrement commode, la source de courant continu est une batterie.

On entend ici par batterie toute source constante d'énergie, toute réserve d'énergie ou encore tout moyen de stockage d'énergie ; il s'agit par exemple d'un accumulateur ou d'une pile.

Selon un autre exemple de réalisation particulièrement commode, la source de courant continu comporte possiblement au moins une cellule photovoltaïque.

Par exemple, et en particulier si la source de courant continu est une batterie, la source de courant continu est connectée au composant électronique au travers d'un interrupteur permettant à un utilisateur de l'entité électronique de connecter cette source de courant continu au composant électronique, ou de l'en déconnecter, à volonté.

La présence d'un interrupteur permet notamment d'éviter la décharge involontaire de la source de courant continu.

Dans un exemple de réalisation, l'interrupteur est un bouton-poussoir dont l'enfoncement connecte la source de courant continu au composant électronique.

Dans un autre exemple de réalisation, l'interrupteur est commandé par un transducteur apte à générer un courant par conversion d'une énergie venant de l'extérieur.

A titre d'exemple, le transducteur peut être un élément piézoélectrique qui convertit une énergie mécanique extérieure en énergie électrique, ou un capteur solaire photovoltaïque qui convertit une énergie lumineuse, en particulier solaire, en énergie électrique.

Dans un mode de réalisation particulier, ledit transducteur est porté par un second module encarté dans une seconde cavité du corps, le second module comportant en outre une seconde antenne additionnelle alimentée par le transducteur et le corps comportant une première antenne additionnelle connectée à l'interrupteur, la première antenne additionnelle étant couplée électro-magnétiquement à ladite seconde antenne additionnelle.

Dans encore un autre exemple de réalisation, l'interrupteur est commandé par une antenne configurée pour connecter la source de courant continu au composant électronique lorsque cette antenne entre dans un champ électromagnétique environnant.

Dans un exemple de réalisation particulier, le corps comporte une antenne connectée au microcircuit, ladite antenne étant configurée pour permettre une communication du microcircuit avec un lecteur externe.

Le corps comporte aussi possiblement en outre une puce. En particulier la puce peut être positionnée entre le microcircuit et l'antenne de communication avec un lecteur externe.

Par exemple, le corps est délimité par ladite face et une face opposée, qui sont planes, l'écartement entre ces faces planes définissant une épaisseur de cette entité électronique.

Parmi une épaisseur, une largeur et une longueur représentant les dimensions de l'entité électronique, l'épaisseur désigne ici la dimension la plus petite.

L'entité électronique est par exemple un passeport ou une carte, par exemple une carte conforme aux normes en vigueur, notamment ISO 7810 et ISO 7816, par exemple une carte de format ID-1 (85,60mm*53,98mm*0,76mm), mais il peut aussi s'agir d'autres formats selon les besoins.

Est également proposé, selon un deuxième aspect, un procédé de fabrication d'une entité électronique comportant tout ou partie des caractéristiques présentées précédemment, le procédé comportant :
- une étape de formation d'un corps contenant un microcircuit et une source de courant continu ainsi qu'une première antenne connectée à la source de courant continu au travers d'un oscillateur, ce corps comportant une cavité débouchant à une face du corps, ladite face du corps formant une face de l'entité, la cavité ayant la forme et le volume d'un module ;
- une étape de formation du module contenant un composant électronique et une seconde antenne connectée à ce composant électronique au travers d'un circuit redresseur ;
- une étape d'encartage du module dans la cavité du corps, le composant électronique étant accessible depuis l'extérieur au travers de ladite face de l'entité, la première antenne et la seconde antenne étant électro-magnétiquement couplées, assurant une alimentation radiofréquence sans fil du composant électronique par la source de courant continu et connectant électriquement ce composant électronique au microcircuit.

Un tel procédé présente ainsi des avantages analogues à ceux énoncés en lien avec l'entité électronique décrite précédemment.

En particulier, les contacts mécaniques entre le composant électronique et le circuit imprimé étant alors déportés dans le module qui est ensuite encarté, le problème de connexion est alors géré séparément de l'encartage, ce qui rend ensuite l'encartage facile à réaliser.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 représente un diagramme d'un exemple de réalisation d'un montage électronique d'une entité électronique selon un exemple de réalisation de la présente invention,
La figure 2 représente un diagramme d'un autre exemple de réalisation d'un montage électronique d'une entité électronique selon un autre exemple de réalisation de la présente invention,
La figure 3 présente schématiquement en coupe un exemple de réalisation d'un corps d'une entité électronique selon un exemple de réalisation de la présente invention,
La figure 4 montre le corps de la figure 2 dans lequel une cavité a été formée pour y placer un module,
La figure 5 présente schématiquement en coupe un exemple de réalisation d'un module d'une entité électronique selon un exemple de réalisation de la présente invention,
La figure 6 représente le corps de la figure 4 dans lequel le module de la figure 5 a été encarté, et
La figure 7 présente schématiquement en vue de dessus une entité électronique selon un exemple de réalisation de la présente invention.

Les éléments identiques représentés sur les figures précitées sont identifiés par des références numériques identiques.

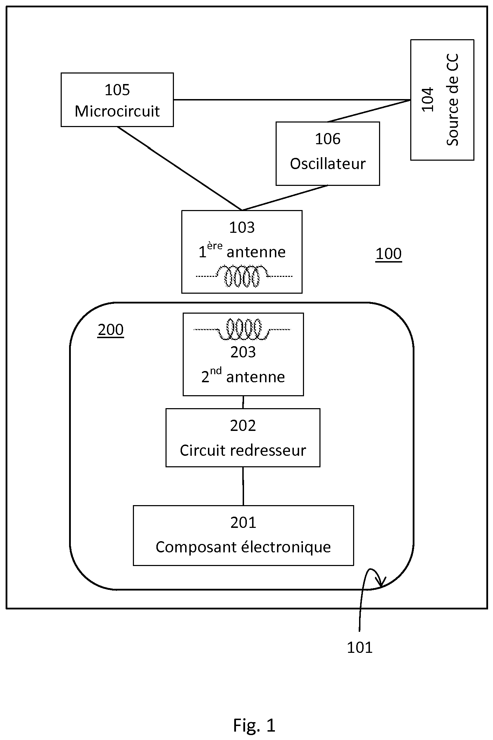

La figure 1 représente schématiquement une entité électronique selon un exemple de réalisation de l'invention.

L'entité électronique est par exemple un passeport ou une carte, par exemple une carte conforme aux normes en vigueur, notamment ISO 7810 et ISO 7816, par exemple une carte de format ID-1 (85,60mm*53,98mm*0,76mm), mais il peut aussi s'agir d'autres formats selon les besoins.

L'entité électronique comporte principalement un corps 100 et un module 200.

Le corps 100 comporte en particulier une cavité 101 et une face supérieure 102.

Par exemple, le corps est délimité par ladite face 102 et une face opposée, qui sont planes, l'écartement entre ces faces planes définissant une épaisseur de cette entité électronique, étant entendu que parmi une épaisseur, une largeur et une longueur représentant les dimensions de l'entité électronique, l'épaisseur désigne ici la dimension la plus petite.

La cavité 101 est ménagée dans le corps 100 de manière à déboucher à la face 102 de ce corps, ladite face 102 du corps formant une face de l'entité électronique.

Le corps comporte aussi un circuit électronique, détaillé ci-après.

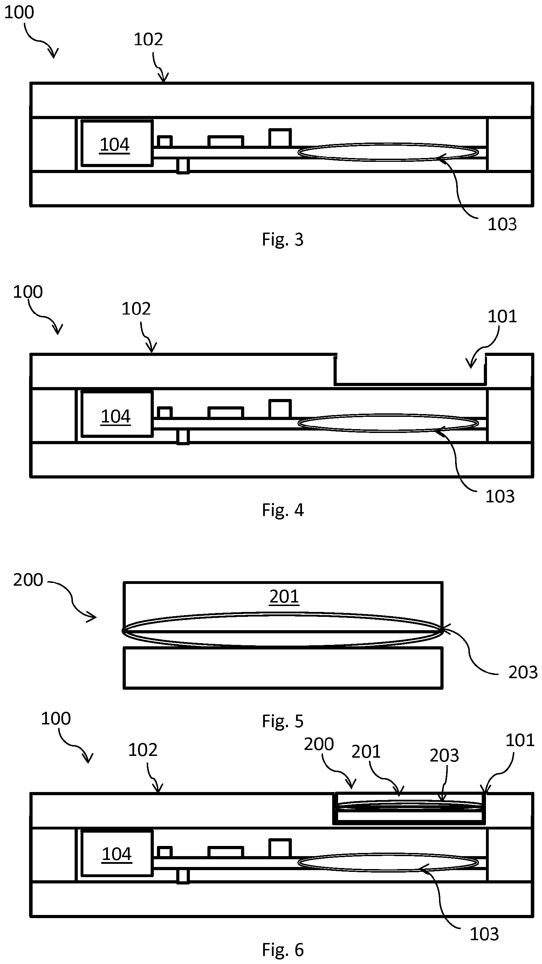

Lorsque l'entité électronique est une carte, par exemple une carte à puce, le corps 100 comprend traditionnellement plusieurs couches, généralement en plastique. Dans ce cas, le circuit électronique est généralement placé entre les couches plastiques. Ceci est par exemple illustré sur les figures 3, 4 et 6.

Le corps, en particulier le circuit électronique, comporte ici une source de courant continu 104 et un microcircuit 105, et selon l'invention, le corps 100 comporte en outre une première antenne 103, reliée au microcircuit 105, ainsi qu'un oscillateur 106 connectant par ailleurs la première antenne 103 à la source de courant continu 104.

Le module 200 est encarté dans le corps 100 en occupant ladite cavité 101.

Le module 200 comporte un composant électronique 201 et une seconde antenne 203.

En particulier, le composant électronique 201 est accessible depuis l'extérieur au travers de ladite face de l'entité 102, comme l'illustre par exemple la figure 6.

Le composant électronique 201 est connecté électriquement au microcircuit 105 et, en fonctionnement, est alimenté en courant continu par la source de courant continu 104.

Pour cela, la seconde antenne 203 est connectée au composant électronique 201 au travers d'un circuit redresseur 202.

En pratique, il peut s'agir d'un régulateur ; à la fonction de redressage s'ajoutent souvent une fonction d'écrêtage et une fonction de stabilisation.

La première antenne 103 et la seconde antenne 203 sont alors électro-magnétiquement couplées, assurant ainsi une alimentation radiofréquence sans fil du composant électronique 201 du module 200 par la source de courant continu 104 du corps 100.

Le couplage entre la première et la deuxième antenne permet de s'affranchir d'une connexion physique difficile à maîtriser.

En effet pour une telle connexion, il est traditionnellement nécessaire de connecter toutes les bornes de contact du composant électronique en regard d'un élément, appelé « flex », traditionnellement noyé dans le corps et comportant des plots de contact correspondant, qui doit en outre être totalement plan, ce qui est difficile au vu des différentes étapes de fabrication d'une entité électronique. De plus, les plots, généralement en cuivre, présentent une épaisseur de l'ordre d'une vingtaine de micromètres, ce qui représente environ un cinquième de l'épaisseur du flex. Il s'ensuit donc un risque d'arrachage du flex lors de l'usinage des plots qui est donc relativement important.

Selon l'invention, les moyens de connexion physiques du composant électronique, qui connectent le composant électronique au microcircuit, sont déportés dans le module au lieu d'être en interface entre le module et le corps. Les contacts mécaniques entre le composant électronique et un circuit imprimé étant alors déportés dans le module qui est ensuite encarté, le problème de connexion est alors géré séparément de l'encartage, ce qui rend ensuite l'encartage facile à réaliser. De plus, cela présente l'avantage de disposer les moyens de connexion à l'intérieur du module. Ils sont ainsi protégés des dégradations volontaires (dues à une action malveillante) ou involontaires (dues à des conditions d'humidité et de température non favorables) qui pourraient être appliquées à l'entité électronique.

La réalisation d'une antenne de faibles dimensions est en fait tout à fait envisageable avec les technologies d'aujourd'hui.

Le couplage entre les deux antennes est facilement réussi car les deux antennes sont figées l'une par rapport à l'autre, en vis-à-vis.

En outre, elles sont de préférence de mêmes tailles et le plus proche possible l'une de l'autre. En plus, la modulation du signal permet une optimisation de transfert des données du composant électronique vers le microcircuit dans le corps de carte.

Par exemple, le couplage entre la première antenne 103 et la seconde antenne 203 est configuré pour transmettre au moins 90% de la puissance émise par la source de courant continu 104.

Ce module 200 est alors possiblement dépourvu d'une alimentation et d'une masse.

Le module comporte par exemple un support intermédiaire (non représenté) qui comporte la seconde antenne 203 et le circuit redresseur 202 et auquel est connecté le composant électronique 201.

Le composant électronique 201 est possiblement de différents types. En particulier, il peut s'agir d'un afficheur ou d'un capteur. Ainsi, outre l'énergie reçue dans un sens, le composant électronique peut émettre ou recevoir des signaux.

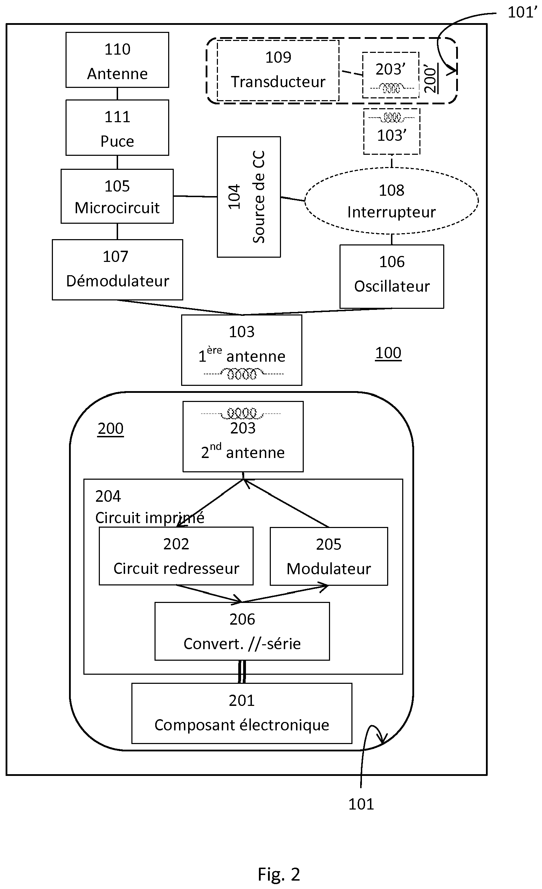

La figure 2 présente un exemple de réalisation de la présente invention dans lequel plusieurs options ont été combinées.

Dans le présent exemple de réalisation, le composant électronique 201 est par exemple un capteur, en particulier un capteur d'empreinte digitale. Le composant électronique génère alors des signaux destinés au microcircuit 105.

Par exemple, l'entité électronique comporte un modulateur 205 et un démodulateur 107.

Le modulateur 205 est alors connecté entre le composant électronique 201 et la seconde antenne 203 au sein du module 200 et le démodulateur 107 est alors connecté entre la première antenne 103 et le microcircuit 105 au sein du corps 100.

La première antenne 103 et la seconde antenne 203 sont ainsi configurées pour assurer en outre une transmission desdits signaux depuis le composant électronique 201 vers le microcircuit 105.

Le module comporte en outre éventuellement un convertisseur parallèle-série 206, positionné entre le composant électronique 201 et la seconde antenne 203. Le convertisseur parallèle-série 206 est alors configuré pour convertir les informations envoyées en parallèle en sortie du composant électronique 201 en informations en série pouvant être transmises par la seconde antenne 203.

Ici, le module 200 comporte en outre un circuit imprimé 204 qui est connecté d'une part à la seconde antenne 203 et d'autre part au composant électronique 201 par au moins quatre bornes. En effet, il est nécessaire d'avoir un nombre minimum de bornes de connexion correspondant au nombre de signaux à transmettre. Par exemple, il peut s'agir d'un signal dit « d'input » (d'entrée) et/ou d'un signal dit « d'output » (de sortie) et/ou d'un signal « Chip select » pour activer une puce (le cas échéant) et/ou d'un signal d'horloge et/ou d'une masse et/ou d'au moins un signal d'alimentation.

Selon le type de capteur, le circuit imprimé 204 est alors configuré pour adapter le signal du composant électronique 201 à une transmission radiofréquence sans fil.

Dans le présent exemple de réalisation, le circuit imprimé 204 comporte alors le circuit redresseur 202, le modulateur 205 et le convertisseur parallèle-série 206.

En effet, par exemple, d'une part, le composant électronique 201 reçoit un signal d'alimentation en provenance de la source de courant continu 104 via la seconde antenne 203 : ce signal est traité et redressé. D'autre part, le composant électronique 201 peut envoyer un signal modulé, par exemple issu d'un capteur d'empreinte formant le composant électronique 201.

La première antenne 103 et la seconde antenne 203, couplées, forment alors une interface de communication sans fil entre le capteur d'empreinte et le microcircuit 105 pour transmettre des données relatives aux empreintes acquises par le capteur.

En d'autres termes, en réception, un signal arrive via la seconde antenne 203, est redressé par le circuit redresseur/régulateur 202 et adressé à la borne correspondante du composant électronique, au travers, le cas échéant, du convertisseur série-parallèle. En émission, des signaux du composant électronique 201, en cas d'émission en parallèle, sont convertis en signaux en série par le convertisseur parallèle-série 206 puis modulés par le modulateur 205 et émis, hors du module 200, par l'antenne 203.

Dans le corps 100, la première antenne 103 est ainsi reliée d'une part à l'oscillateur 106, lui-même relié à la source de courant continu 104, et d'autre part au démodulateur 107, lui-même relié au microcircuit 105.

Dans le présent exemple de réalisation, la source de courant continu 104 est une batterie.

De plus, le corps 100 comporte en outre ici un interrupteur 108.

Dans cet exemple de réalisation, l'interrupteur 108 est positionné entre la source de courant continu 104 et l'oscillateur 106.

La présence d'un interrupteur permet notamment à un utilisateur de l'entité électronique de connecter la source de courant continu 104 au composant électronique 201, ou de l'en déconnecter, à volonté.

Ici, le corps 100 comporte une seconde cavité 101' et un second module 200' qui est encarté dans la seconde cavité 101'.

Le second module 200' comporte un transducteur 109. En fonctionnement, le transducteur génère un courant par conversion d'une énergie venant de l'extérieur. A titre d'exemple, le transducteur peut être un élément piézoélectrique qui convertit une énergie mécanique extérieure en énergie électrique, ou un capteur solaire photovoltaïque qui convertit une énergie lumineuse, en particulier solaire, en énergie électrique.

Le transducteur est configuré pour commander l'interrupteur 108.

A cet effet, le second module 200' comporte une seconde antenne additionnelle 203', qui est alors alimentée par le transducteur 109, et le corps comporte une première antenne additionnelle 103' qui est connectée à l'interrupteur 108.

La première antenne additionnelle 103' est alors couplée électro-magnétiquement à ladite seconde antenne additionnelle 203'.

Selon un autre exemple non représenté, l'interrupteur est un bouton poussoir et dans ce cas l'entité électronique est possiblement dépourvue de première antenne additionnelle, de seconde cavité et de second module, c'est-à-dire possiblement dépourvue de transducteur et de seconde antenne additionnelle.

Dans encore un autre exemple non représenté, le corps comporte une autre antenne qui est configurée pour commander l'interrupteur pour connecter la source de courant continu au composant électronique lorsque cette antenne entre dans un champ électromagnétique environnant. Dans ce cas, l'entité électronique est également possiblement dépourvue de première antenne additionnelle, de seconde cavité et de second module, c'est-à-dire possiblement dépourvue de transducteur et de seconde antenne additionnelle.

Dans le présent exemple de réalisation, le corps comporte aussi une antenne 110 connectée au microcircuit. L'antenne 110, dite antenne 110 de communication avec un lecteur externe, est configurée pour permettre une communication du microcircuit 105 avec un lecteur externe.

Enfin, le corps comporte par exemple une puce 111. En particulier, la puce 111 est disposée entre le microcircuit 105 et l'antenne 110.

Les figures 3 à 6 illustrent schématiquement un procédé de fabrication d'une entité électronique selon un exemple de réalisation de l'invention.

Il s'agit par exemple d'une part de réaliser le corps de l'entité électronique.

Comme le montre la figure 3, l'ensemble du circuit électronique, par exemple la source de courant continu 104, la première antenne 103, un microcircuit, un oscillateur etc., est noyé dans le corps. Si l'entité électronique est une carte, le circuit électronique est par exemple introduit entre des couches formant le corps.

La figure 4 représente une étape de formation de la cavité 101. La cavité 101 est dimensionnée pour avoir la forme et le volume du module 200 destiné à y être inséré.

Il s'agit par exemple d'une étape de fraisage réalisée sur une partie de la du corps, en partant de la face 102 afin de former la cavité 101, débouchant à une face 102 du corps.

La figure 5 représente schématique une étape de formation du module 200. Le module 200 contient le composant électronique 201 et la seconde antenne 203 connectée à ce composant électronique 201 au travers d'un circuit redresseur.

Par exemple, l'étape de formation du module comporte une étape de formation d'un support intermédiaire qui comporte la seconde antenne 203 et le circuit redresseur puis une étape de connexion du composant électronique 201 au support intermédiaire.

Enfin, la figure 6 représente une étape d'encartage du module 200 dans le corps 100, en particulier, dans la cavité 101 du corps 100, avec le composant électronique 201 accessible depuis l'extérieur au travers de ladite face 102.

L'encartage peut être fait à chaud ou à froid.

Il peut alors être réalisé par collage, par exemple via un adhésif, par exemple du PSA (« Pressure Sensitive Adhesive ») ou « hotmelt ».

Le procédé comporte aussi par exemple une étape de couplage électromagnétique de la première antenne 103 et de la seconde antenne 203 afin d'assurer une alimentation radiofréquence sans fil du composant électronique 201 par la source de courant continu 104 et de connecter électriquement le composant électronique 201 au microcircuit 105.

L'accord des deux antennes l'une par rapport à l'autre permet ainsi un échange de données le cas échéant.

Si l'entité électronique comporte une autre cavité et un second module, le procédé comporte des étapes analogues pour former l'autre cavité et encarter le second module. Le second module est réalisé en conséquent.

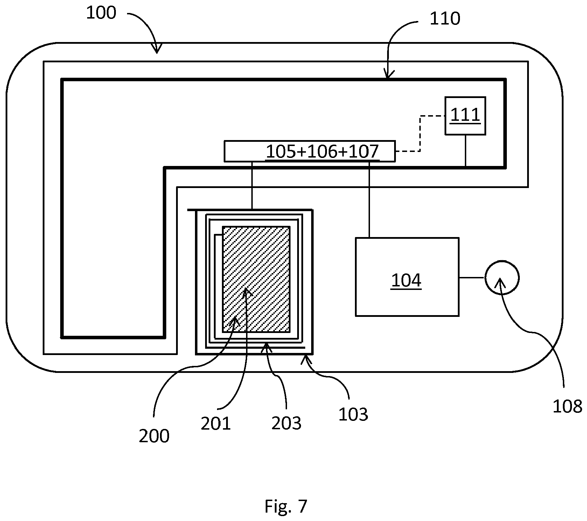

A titre illustratif, la figure 7 présente schématiquement en vue de dessus une entité électronique selon un exemple de réalisation de l'invention.

Il s'agit par exemple d'une carte à puce comportant un corps 100, un module 200 et en particulier une puce 111 dans le corps 100.

La puce 111 est reliée d'une part à une antenne 110 de communication avec un lecteur externe et d'autre part à un microcircuit 105, l'antenne 110 de communication avec un lecteur externe et le microcircuit 105 étant situés dans le corps 100.

Dans cet exemple de réalisation, l'entité électronique comporte une source de courant continu 104 et un interrupteur 108 qui commande la source de courant continu, également dans le corps 100.

Par souci de simplification, le microcircuit 105, un oscillateur 106 et un démodulateur 107 du corps 100 ont été schématisés conjointement.

En particulier, dans cet exemple de réalisation, la source de courant continu 104 est alors disposée entre l'interrupteur 108 et l'oscillateur 106.

Le corps 100 comporte en outre une première antenne 103 à laquelle sont connectés l'oscillateur 106 et le démodulateur 107.

La première antenne 103 est couplée à une seconde antenne 203 appartenant au module 200.

Enfin, le module 200 comporte un composant électronique 201, qui est relié à la seconde antenne 203 par l'intermédiaire d'un circuit redresseur non visible ici.

Si le composant électronique 201 comporte un capteur d'empreinte digitale, l'entité électronique est alors par exemple une carte biométrique.

## Revendications

1. Entité électronique comportant :
- un corps (100) dans lequel est ménagée une cavité (101) débouchant à une face de ce corps (102), ladite face (102) du corps formant une face de l'entité,
- un module (200) encarté dans ce corps (100) en occupant ladite cavité (101),
- un microcircuit (105) faisant partie de ce corps (100),
- une source de courant continu (104) faisant partie de ce corps (100), et
- un composant électronique (201) faisant partie du module (200) et accessible depuis l'extérieur au travers de ladite face de l'entité (102), ce composant électronique (201) étant connecté électriquement au microcircuit (105) et devant être alimenté en courant continu par la source de courant continu (104),
**caractérisée en ce que** le corps (100) comporte une première antenne (103) connectée à la source de courant continu (104) au travers d'un oscillateur (106) et **en ce que** le module (200) comporte en outre une seconde antenne (203) connectée à ce composant électronique (201) au travers d'un circuit redresseur (202), ces première antenne (103) et seconde antenne (203) étant électro-magnétiquement couplées, assurant une alimentation radiofréquence sans fil du composant électronique (201) du module (200) par la source de courant continu (104) du corps (100) et connectant électriquement le composant électronique (201) au microcircuit (105).

2. Entité électronique selon la revendication 1 dans laquelle le module (200) comporte un circuit imprimé (204) connecté d'une part à la seconde antenne (203) et d'autre part au composant électronique (201) par une pluralité de bornes dont le nombre est égal ou supérieur à 4.

3. Entité électronique selon l'une quelconque des revendications 1 ou 2, comportant en outre un modulateur (205) connecté à l'une de la première antenne (103) ou de la seconde antenne (203) et un démodulateur (107) connecté à l'autre de la première antenne (103) ou de la seconde antenne (203), les première antenne (103) et seconde antenne (203) étant ainsi configurées pour assurer en outre une transmission de signaux entre le composant électronique (201) et le microcircuit (105).

4. Entité électronique selon la revendication 3 dans laquelle le composant électronique (201) est un capteur générant des signaux destinés au microcircuit (105), le modulateur (205) étant connecté entre le composant électronique (201) et la seconde antenne (203) au sein du module (200) et le démodulateur (107) est connecté entre la première antenne (103) et le microcircuit (105) au sein du corps (100) de sorte que les première et seconde antennes assurent une transmission desdits signaux depuis le composant électronique (201) vers le microcircuit (105).

5. Entité électronique selon la revendication 4, dans laquelle le composant électronique (201) est un capteur d'empreinte digitale.

6. Entité électronique selon la revendication 4 ou la revendication 5, dans laquelle le module (200) comporte un convertisseur parallèle-série (206) entre le composant électronique (201) et la seconde antenne (203) configuré pour au moins transmettre des signaux en série.

7. Entité électronique selon l'une quelconque des revendications 1 à 6, dans laquelle la source de courant continu (104) est une batterie.

8. Entité électronique selon l'une quelconque des revendications 1 à 7, dans laquelle la source de courant continu (104) est connectée au composant électronique (201) au travers d'un interrupteur (108) permettant à un utilisateur de l'entité électronique de connecter cette source de courant continu (104) au composant électronique (201), ou de l'en déconnecter, à volonté.

9. Entité électronique selon la revendication 8, dans laquelle l'interrupteur (108) est un bouton-poussoir dont l'enfoncement connecte la source de courant continu (104) au composant électronique (201).

10. Entité électronique selon la revendication 8, dans laquelle l'interrupteur (108) est commandé par un transducteur (109) apte à générer un courant par conversion d'une énergie venant de l'extérieur, ledit transducteur (109) étant porté par un second module (200') encarté dans une seconde cavité (101') du corps (100), le second module (200') comportant en outre une seconde antenne additionnelle (203') alimentée par le transducteur (109) et le corps (100) comportant une première antenne additionnelle (103') connectée à l'interrupteur (108), la première antenne additionnelle (103') étant couplée électro-magnétiquement à ladite seconde antenne additionnelle (203').

11. Entité électronique selon la revendication 8, dans laquelle l'interrupteur (108) est commandé par une antenne configurée pour connecter la source de courant continu (104) au composant électronique (201) lorsque cette antenne entre dans un champ électromagnétique environnant.

12. Entité électronique selon l'une quelconque des revendications 1 à 6, dans laquelle la source de courant continu (104) comporte au moins une cellule photovoltaïque.

13. Entité électronique selon l'une quelconque des revendications 1 à 12, dans laquelle le corps (100) comporte une antenne (110) connectée au microcircuit (104), ladite antenne (110) étant configurée pour permettre une communication du microcircuit (104) avec un lecteur externe.

14. Entité électronique selon l'une quelconque des revendications 1 à 13, dans laquelle le couplage entre la première antenne (103) et la seconde antenne (203) est configuré pour transmettre au moins 90% de la puissance émise par la source de courant continu (104).

15. Entité électronique selon l'une quelconque des revendications 1 à 14, dans laquelle le corps (100) est délimité par ladite face (102) et une face opposée, qui sont planes, l'écartement entre ces faces planes définissant une épaisseur de cette entité électronique.

16. Procédé de fabrication d'une entité électronique selon l'une quelconque des revendications 1 à 15, le procédé comportant :
- une étape de formation d'un corps (100) contenant un microcircuit (105) et une source de courant continu (104) ainsi qu'une première antenne (103) connectée à la source de courant continu (104) au travers d'un oscillateur (106), ce corps (100) comportant une cavité (101) débouchant à une face (102) du corps, ladite face (102) du corps formant une face de l'entité, la cavité (101) ayant la forme et le volume d'un module (200) ;
- une étape de formation du module (200) contenant un composant électronique (201) et une seconde antenne (203) connectée à ce composant électronique (201) au travers d'un circuit redresseur (202) ;
- une étape d'encartage du module (200) dans la cavité (101) du corps (100), le composant électronique (201) étant accessible depuis l'extérieur au travers de ladite face de l'entité, la première antenne (103) et la seconde antenne (203) étant électro-magnétiquement couplées, assurant une alimentation radiofréquence sans fil du composant électronique (201) par la source de courant continu (104) et connectant électriquement ce composant électronique (201) au microcircuit (105).

## Patentansprüche

1. Elektronische Vorrichtung, umfassend:
- einen Körper (100), in dem ein Hohlraum (101) eingerichtet ist, der auf einer Fläche dieses Körpers (102) ausmündet, wobei die Fläche (102) des Körpers eine Fläche der Vorrichtung bildet,
- ein Modul (200), das in diesen Körper (100) eingesteckt ist, indem es den Hohlraum (101) belegt,
- einen Mikroschaltkreis (105), der Teil dieses Körpers (100) ist,
- eine Gleichstromquelle (104), die Teil dieses Körpers (100) ist, und
- eine elektronische Komponente (201), die Teil des Moduls (200) ist und von außen anhand der Fläche der Vorrichtung (102) erreichbar ist, wobei diese elektronische Komponente (201) elektrisch an den Mikroschaltkreis (105) angeschlossen ist und von der Gleichstromquelle (104) mit Gleichstrom versorgt werden muss,
**dadurch gekennzeichnet, dass** der Körper (100) eine erste Antenne (103) aufweist, die an die Gleichstromquelle (104) anhand eines Oszillators (106) angeschlossen ist, und dass das Modul (200) ferner eine zweite Antenne (203) aufweist, die an diese elektronische Komponente (201) anhand einer Gleichrichterschaltung (202) angeschlossen ist, wobei diese erste Antenne (103) und diese zweite Antenne (203) elektromagnetisch gekoppelt sind, wodurch eine drahtlose Radiofrequenzversorgung der elektronischen Komponente (201) des Moduls (200) durch die Gleichstromquelle (104) des Körpers (100) gesichert ist und die elektronische Komponente (201) an den Mikroschaltkreis (105) elektrisch anschließt.

2. Elektronische Vorrichtung nach Anspruch 1, wobei das Modul (200) eine gedruckte Schaltung (204) aufweist, die zum einen an die zweite Antenne (203) und zum anderen an die elektronische Komponente (201) mittels einer Vielzahl von Klemmen angeschlossen ist, deren Anzahl gleich oder größer als 4 ist.

3. Elektronische Vorrichtung nach einem der Ansprüche 1 oder 2, aufweisend ferner einen Modulator (205), der an eine von der ersten Antenne (103) oder der zweiten Antenne (203) angeschlossen ist, und einen Demodulator (107), der an die andere von der ersten Antenne (103) oder der zweiten Antenne (203) angeschlossen ist, wobei die erste Antenne (103) und die zweite Antenne (203) somit ausgelegt sind, um ferner eine Signalübertragung zwischen der elektronischen Komponente (201) und dem Mikroschaltkreis (105) sicherzustellen.

4. Elektronische Vorrichtung nach Anspruch 3, wobei die elektronische Komponente (201) ein Sensor ist, der Signale erzeugt, die für den Mikroschaltkreis (105) bestimmt sind, wobei der Modulator (205) zwischen der elektronischen Komponente (201) und der zweiten Antenne (203) innerhalb des Moduls (200) angeschlossen ist und der Demodulator (107) zwischen der ersten Antenne (103) und dem Mikroschaltkreis (105) innerhalb des Körpers (100) derart angeschlossen ist, dass die erste und zweite Antenne eine Übertragung der Signale von der elektronischen Komponente (201) zum Mikroschaltkreis (105) sicherstellen.

5. Elektronische Vorrichtung nach Anspruch 4, wobei die elektronische Komponente (201) ein digitaler Abdrucksensor ist.

6. Elektronische Vorrichtung nach Anspruch 4 oder Anspruch 5, wobei das Modul (200) einen Parallel-Reihe-Konverter (206) zwischen der elektronischen Komponente (201) und der zweiten Antenne (203) aufweist, der ausgelegt ist, um mindestens Signale in Reihe zu übertragen.

7. Elektronische Vorrichtung nach einem der Ansprüche 1 bis 6, wobei die Gleichstromquelle (104) eine Batterie ist.

8. Elektronische Vorrichtung nach einem der Ansprüche 1 bis 7, wobei die Gleichstromquelle (104) an die elektronische Komponente (201) anhand eines Schalters (108) angeschlossen ist, der es einem Benutzer der elektronischen Vorrichtung erlaubt, diese Gleichstromquelle (104) nach Belieben an die elektronische Komponente (201) anzuschließen oder davon zu trennen.

9. Elektronische Vorrichtung nach Anspruch 8, wobei der Schalter (108) ein Druckknopf ist, dessen Eindrücken die Gleichstromquelle (104) an die elektronische Komponente (201) anschließt.

10. Elektronische Vorrichtung nach Anspruch 8, wobei der Schalter (108) von einem Wandler (109) gesteuert wird, der imstande ist, einen Strom durch Umwandlung einer von außen kommenden Energie zu erzeugen, wobei der Wandler (109) von einem zweiten Modul (200') getragen wird, das in einen zweiten Hohlraum (101') des Körpers (100) eingesteckt ist, wobei das zweite Modul (200') ferner eine zusätzliche zweite Antenne (203') aufweist, die von dem Wandler (109) versorgt wird, und der Körper (100) eine zusätzliche erste Antenne (103') aufweist, die an den Schalter (108) angeschlossen ist, wobei die zusätzliche erste Antenne (103') mit der zusätzlichen zweiten Antenne (203') elektromagnetisch gekoppelt ist.

11. Elektronische Vorrichtung nach Anspruch 8, wobei der Schalter (108) von einer Antenne gesteuert wird, die ausgelegt ist, um die Gleichstromquelle (104) an die elektronische Komponente (201) anzuschließen, wenn diese Antenne in ein umgebendes elektromagnetisches Feld eintritt.

12. Elektronische Vorrichtung nach einem der Ansprüche 1 bis 6, wobei die Gleichstromquelle (104) mindestens eine Photovoltaikzelle aufweist.

13. Elektronische Vorrichtung nach einem der Ansprüche 1 bis 12, wobei der Körper (100) eine Antenne (110) aufweist, die an den Mikroschaltkreis (104) angeschlossen ist, wobei die Antenne (110) ausgelegt ist, um eine Kommunikation des Mikroschaltkreises (104) mit einem externen Lesegerät zu erlauben.

14. Elektronische Vorrichtung nach einem der Ansprüche 1 bis 13, wobei die Kopplung zwischen der ersten Antenne (103) und der zweiten Antenne (203) ausgelegt ist, um mindestens 90 % der von der Gleichstromquelle (104) gesendeten Leistung zu übertragen.

15. Elektronische Vorrichtung nach einem der Ansprüche 1 bis 14, wobei der Körper (100) von der Fläche (102) und einer gegenüberliegenden Fläche begrenzt ist, die eben sind, wobei der Abstand zwischen diesen ebenen Flächen eine Dicke dieser elektronischen Vorrichtung festlegt.

16. Verfahren zur Herstellung einer elektronischen Vorrichtung nach einem der Ansprüche 1 bis 15, wobei das Verfahren aufweist:
- einen Schritt des Bildens eines Körpers (100), der einen Mikroschaltkreis (105) und eine Gleichstromquelle (104) enthält sowie eine erste Antenne (103), die an die Gleichstromquelle (104) anhand eines Oszillators (106) angeschlossen ist, wobei dieser Körper (100) einen Hohlraum (101) aufweist, der auf einer Fläche (102) des Körpers ausmündet, wobei die Fläche (102) des Körpers eine Fläche der Vorrichtung bildet, wobei der Hohlraum (101) die Form und das Volumen eines Moduls (200) hat;
- einen Schritt des Bildens des Moduls (200), das eine elektronische Komponente (201) und eine zweite Antenne (203) enthält, die an diese elektronische Komponente (201) anhand einer Gleichrichterschaltung (202) angeschlossen ist;
- einen Schritt des Einsteckens des Moduls (200) in den Hohlraum (101) des Körpers (100), wobei die elektronische Komponente (201) von außen anhand der Fläche der Vorrichtung erreichbar ist, wobei die erste Antenne (103) und die zweite Antenne (203) elektromagnetisch gekoppelt sind, wodurch eine drahtlose Radiofrequenzversorgung der elektronischen Komponente (201) durch die Gleichstromquelle (104) gesichert ist und diese elektronische Komponente (201) an den Mikroschaltkreis (105) elektrisch anschließt.

## Claims

1. An electronic entity comprising:
- a body (100) in which there is formed a cavity (101) emerging on one face of this body (102), said face (102) of the body forming a face of the entity,
- a module (200) inserted into this body (100) by occupying said cavity (101),
- a microcircuit (105) forming part of this body (100),
- a direct current source (104) forming part of this body (100), and
- an electronic component (201) forming part of the module (200) and accessible from the outside through said face of the entity (102), this electronic component (201) being connected electrically to the microcircuit (105) and having to be supplied with direct current by the direct current source (104),
**characterized in that** the body (100) comprises a first antenna (103) connected to the direct current source (104) through an oscillator (106) and **in that** the module (200) also comprises a second antenna (203) connected to this electronic component (201) through a rectifier circuit (202), this first antenna (103) and this second antenna (203) being electromagnetically coupled, ensuring a wireless radiofrequency powering of the electronic component (201) of the module (200) by the direct current source (104) of the body (100) and electrically connecting this electronic component (201) to the microcircuit (105).

2. The electronic entity as claimed in claim 1, in which the module (200) comprises a printed circuit (204) connected on the one hand to the second antenna (203) and on the other hand to the electronic component (201) by a plurality of terminals, the number of which is greater than or equal to 4.

3. The electronic entity as claimed in either one of claims 1 and 2, also comprising a modulator (205) connected to one of the first antenna (103) or the second antenna (203) and a demodulator (107) connected to the other of the first antenna (103) or the second antenna (203), the first antenna (103) and second antenna (203) being thus configured to also ensure a transmission of signals between the electronic component (201) and the microcircuit (105).

4. The electronic entity as claimed in claim 3, in which the electronic component (201) is a sensor generating signals intended for the microcircuit (105), the modulator (205) being connected between the electronic component (201) and the second antenna (203) in the module (200) and the demodulator (107) is connected between the first antenna (103) and the microcircuit (105) in the body (100) such that the first and second antennas ensure a transmission of said signals from the electronic component (201) to the microcircuit (105).

5. The electronic entity as claimed in claim 4, in which the electronic component (201) is a fingerprint sensor.

6. The electronic entity as claimed in claim 4 or claim 5, in which the module (200) comprises a parallel-serial converter (206) between the electronic component (201) and the second antenna (203) configured to at least transmit signals in series.

7. The electronic entity as claimed in any one of claims 1 to 6, in which the direct current source (104) is a battery.

8. The electronic entity as claimed in any one of claims 1 to 7, in which the direct current source (104) is connected to the electronic component (201) through a switch (108) allowing a user of the electronic entity to connect this direct current source (104) to the electronic component (201), or to disconnect it, at will.

9. The electronic entity as claimed in claim 8, in which the switch (108) is a pushbutton, the depression of which connects the direct current source (104) to the electronic component (201).

10. The electronic entity as claimed in claim 8, in which the switch (108) is controlled by a transducer (109) capable of generating a current by conversion of an energy coming from outside, said transducer (109) being borne by a second module (200') inserted into a second cavity (101') of the body (100), the second module (200') also comprising a second additional antenna (203') powered by the transducer (109) and the body (100) comprising a first additional antenna (103') connected to the switch (108), the first additional antenna (103') being coupled electromagnetically to said second additional antenna (203').

11. The electronic entity as claimed in claim 8, in which the switch (108) is controlled by an antenna configured to connect the direct current source (104) to the electronic component (201) when this antenna enters into a surrounding electromagnetic field.

12. The electronic entity as claimed in any one of claims 1 to 6, in which the direct current source (104) comprises at least one photovoltaic cell.

13. The electronic entity as claimed in any one of claims 1 to 12, in which the body (100) comprises an antenna (110) connected to the microcircuit (104), said antenna (110) being configured to allow the microcircuit (104) to communicate with an external reader.

14. The electronic entity as claimed in any one of claims 1 to 13, in which the coupling between the first antenna (103) and the second antenna (203) is configured to transmit at least 90 % of the power transmitted by the direct current source (104).

15. The electronic entity as claimed in any one of claims 1 to 14, in which the body (100) is delimited by said face (102) and an opposite face, which are both planar, the separation between these planar faces defining a thickness of this electronic entity.

16. A method for fabricating an electronic entity as claimed in any one of claims 1 to 15, the method comprising:
- a step of formation of a body (100) containing a microcircuit (105) and a direct current source (104) and a first antenna (103) connected to the direct current source (104) through an oscillator (106), this body (100) comprising a cavity (101) emerging on one face (102) of the body, said face (102) of the body forming a face of the entity, the cavity (101) having the form and the volume of a module (200);
- a step of formation of the module (200) containing an electronic component (201) and a second antenna (203) connected to this electronic component (201) through a rectifier circuit (202);
- a step of insertion of the module (200) into the cavity (101) of the body (100), the electronic component (201) being accessible from the outside through said face of the entity, the first antenna (103) and the second antenna (203) being electromagnetically coupled, ensuring a wireless radiofrequency powering of the electronic component (201) by the direct current source (104) and electrically connecting this electronic component (201) to the microcircuit (105).
